# EUROPÄISCHE PATENTSCHRIFT

(11) **EP 2 652 473 B1**
(45) Veröffentlichungstag und Bekanntmachung des Hinweises auf die Patenterteilung: **07.01.2015**
(21) Anmeldenummer: 11788131.8
(22) Anmeldetag: 23.11.2011
(51) Int. Cl.: B23K 26/32, B23K 26/14, G01L 7/08, G01L 19/06, B23K 26/34

(54) **FLANSCH FÜR DRUCKMESSZELLEN ODER DRUCKMITTLER-VORRICHTUNGEN UND VERFAHREN ZUR HERSTELLUNG SOLCHER FLANSCHE**
FLANGE FOR PRESSURE MEASURING CELLS OR FOR CHEMICAL SEAL DEVICES AND METHOD FOR PRODUCING SUCH FLANGES
BRIDE POUR CELLULES DE MESURE DE PRESSION OU SYSTÈMES TRANSMETTEURS DE PRESSION ET PROCÉDÉ DE FABRICATION DE TELLES BRIDES

(30) Priorität: 15.12.2010 DE 102010063114
(43) Veröffentlichungstag der Anmeldung: 23.10.2013
(73) Patentinhaber: Endress+Hauser GmbH+Co. KG, 79689 Maulburg (DE)
(72) Erfinder: BERGER, Markus, 79664 Wehr (DE); FREY, Volker, 79650 Schopfheim (DE); SALG, Dietmar, 79650 Schopfheim/Gersbach (DE); BOLLIG, Christoph, 79650 Schopfheim (DE)
(74) Vertreter: Andres, Angelika Maria
(86) Internationale Anmeldenummer: PCT/EP2011/070834
(87) Internationale Veröffentlichungsnummer: WO 2012/079944

(56) Entgegenhaltungen:
- EP-A1- 0 607 482
- EP-A1- 2 072 176
- US-A1- 2010 064 816

## Beschreibung

Druckmessanordnungen sind aus der industriellen Prozessmesstechnik hinlänglich bekannt. Sie dienen dort in verschiedenen Ausführungen zur Bestimmung eines Druckes eines Prozessmediums. Bekannte Druckmessanordnungen dieser Art umfassen einen Grundkörper, der auch ein Flansch sein kann, und eine darauf befestigte Membran bzw. Messmembran, die durch auflastenden Druck des Prozessmediums in Richtung Grundkörper verformt wird. Ein dabei auftretender Hub der Membran wird durch geeignete Verfahren, üblicherweise elektrisch, abgegriffen und gibt ein Maß für den auflastenden Druck. Die Druckmesszelle arbeitet damit als Druckwandler. Flansche als Grundkörper einer Druckmesszelle sind deutlich größer als die Druckmesszelle selbst.

Falls die eigentliche Mess-Membran der Druckmesszelle nicht selbst dem zu messende Prozessmedium ausgesetzt werden soll, entweder, weil das Prozessmedium chemisch sehr aggressiv ist oder weil es eine sehr hohe Temperatur aufweist, wird eine so genannte Druckmittler-Vorrichtung verwendet, die den Druck des Prozessmediums abgreift und an den eigentlichen Druckwandler überträgt. Solche Druckmittler-Vorrichtungen umfassen häufig ebenfalls einen Membranträger, vergleichbar dem oben genannten Grundkörper, auf dem auch eine Membran, auch Trennmembran genannt, befestigt ist, die mit dem zu messenden Prozessmedium in Berührung kommt. Ein Zwischenraum zwischen Trennmembran und dem Membranträger ist mit einer flüssigkeitsgefüllten Kapillarleitung verbunden und überträgt den auf der Trennmembran auflastenden Druck des Prozessmediums auf eine mit der Kapillarleitung verbundene Druckmesszelle.

Es hat sich in der Praxis gezeigt, dass direkt mit dem Prozessmedium in Kontakt stehende Materialien, seien es Membranen einer Druckmesszelle oder solche einer Druckmittler-Vorrichtung, aus einem Sonderwerkstoff gefertigt werden müssen, da sie aggressiven Prozessmedien oder häufig auch aggressiven Reinigungsverfahren von Rohrleitungen und Behältern widerstehen sollen. Gleiches gilt im Prinzip auch für die Seite von Flanschen, die im Kontakt mit dem Prozessmedium stehen. Eine Fertigung eines gesamten Flansches aus einem Sonderwerkstoff ist jedoch sehr kostenintensiv und verteuert Druckmesszellen bzw. Druckmittler-Vorrichtungen mit solchen Flanschen als Grundkörper.

Aus dem Stand der Technik ist bekannt, nur die exponierten Teilbereiche eines Gegenstandes aus beständigerem Material auszuführen.

So beschreibt die Veröffentlichung EP 2 072 176 A1 beispielsweise ein Herstellungsverfahren für Turbinenschaufeln, wobei für den Erosionsschutz ein Stahl, der mindestens 0,1 % Kohlenstoff und mindestens 12 % Chrom enthält, an erosionsgefährdeten Bereichen der Turbinenschaufeln mit Laserauftragsschweißen aufgebracht wird.

Die Veröffentlichung EP 0 607 482 A1 offenbart einen Druckmittler mit einem Gehäuse und einem Einsatz, wobei der Einsatz an dem Gehäuse befestigt ist, wobei zumindest dessen Oberfläche aus einem dem Messstoff angepassten Sondermaterial besteht, wobei an dem Einsatz eine Membran angeschweißt, eingeklebt oder zwischen dem Einsatz und dem Gehäuse eingeklemmt ist. Die Membran besteht ebenfalls aus einem den Messstoff angepassten Sondermaterial. Diese Konstruktion erscheint jedoch sehr aufwändig.

Der Erfindung liegt daher die Aufgabe zugrunde, einen korrosionsfesten und preiswerten Flansch für Druckmesszellen bzw. Druckmittler-Vorrichtungen zu schaffen.

Diese Aufgabe wird nach der Erfindung gelöst durch einen Flansch für Druckmesszellen oder Druckmittler-Vorrichtungen, der im wesentlichen aus einem metallischen Grundmaterial aus einem Standardwerkstoff besteht und auf der einem Prozessmedium zugewandten Seite durch eine dort aufgebrachtes Schicht aus hochlegiertem Sondermaterial aufgepanzert ist.

Bei einer besonderen Ausführungsform des erfindungsgemäßen Flansches ist der metallische Standardwerkstoff für den Flansch ein einfacher Kohlenstoff-Stahl.

Bei einer anderen Ausführungsform des erfindungsgemäßen Flansches ist das aufgebrachte Sondermaterial eine Nickellegierung wie z.B. Hastelloy C276/2.4819.

Die oben genannte Aufgabe wird nach der Erfindung außerdem gelöst durch ein Verfahren zur Herstellung eines Flansches, bei dem
a) der Flansch in seiner Grundform vorgedreht und gebohrt wird;
b) auf einen gewünschten Dichtbereich des Flansches metallisches Pulver aus dem vorbestimmten Sondermaterial aufgetragen wird;
c) das Pulver durch ein geeignetes Schweißverfahren auf den Flansch aufgeschweißt wird;
d) der Flansch mit der aufgeschweißten Schicht aus Sondermaterial auf die gewünschten Maße fertig gedreht wird; und
e) eine Membran auf der Schicht aus Sondermaterial fest geschweißt wird.

Bei einer besonderen Ausführungsform des erfindungsgemäßen Verfahrens wird das Pulver aus Sondermaterial spiralförmig auf den Flansch aufgetragen.

Bei einer weiteren Ausführungsform des erfindungsgemäßen Verfahrens wird das Pulver aus Sondermaterial durch Laserauftragsschweißen auf den Flansch aufgeweißt.

Der Vorteil der Erfindung begründet sich darin, dass nur beim erfindungsgemäßen Flansch nur seine einer möglichen Korrosion tatsächlich ausgesetzte Seite mit einem korrosionsfesten Material aufgepanzert wird. Als Grundmaterial für den erfindungsgemäßen Flansch dient ein einfacher Kohlenstoff-Stahl, wie beispielsweise St 52-3 / 1.0570 oder ein ähnlich leicht zu bearbeitender und kostengünstiger Stahl. Das korrosionsfeste Material wird auf einfache Weise aufgebracht und durch kostengünstige Schweißverfahren mit dem Grundmaterial des Flansches verschweißt. Dadurch wird eine innige und feste Verbindung des Grundmaterials des Flansches mit dem Sondermaterial erreicht. Das aufgetragene Sondermaterial kann im Rahmen des Fein- und Fertigdrehens des Flansches bearbeitet werden und auf die gewünschten Maße gebracht werden.

Ein weiterer Vorteil der Erfindung besteht darin, dass als Sondermaterial für die Aufpanzerung des Flansches das gleiche Material gewählt werden kann, aus dem die später darauf zu befestigende Membran, sei eine Trennmembran einer Druckmittler-Vorrichtung oder sei es eine Messmembran für eine Druckmesszelle, besteht.

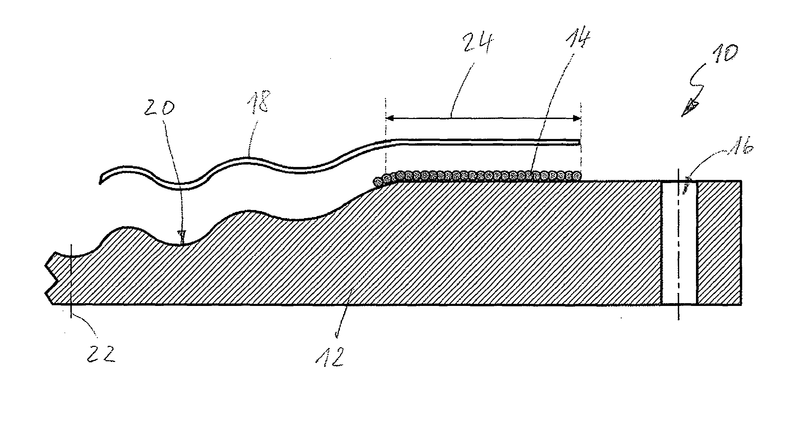

Nachfolgend wird die Erfindung genauer beschrieben und erläutert, wobei auf die beigefügte Zeichnung verwiesen wird, die eine bevorzugte Ausführungsform der Erfindung darstellt.

Ein erfindungsgemäßer Flansch 10 umfasst einen zylindrischen Grundkörper 12 aus einem metallischen, kostengünstigen Standardwerkstoff, vorzugsweise ein einfache Kohlenstoff-Stahl, wie beispielsweise St52-3 / 1.0570 oder ein austenitischer Stahl wie beispielsweise 1.4404 / 316L und eine darauf aufgeschweißte Schicht 14 aus einem metallischen Sondermaterial, beispielsweise Hastelloy C276/2.4819 Der Flansch 10 kann, wie üblich, mit einem hier nicht dargestellten Gegenflansch verschraubt werden. Zur Veranschaulichung ist in der Zeichnung ein Loch 16 des Lochkreises des Flansches 10 dargestellt.

Um zu verdeutlichen, dass der erfindungsgemäßer Flansch 10 für eine Druckmessanordnung bestimmt ist, sei es für eine Druckmittler-Vorrichtung, sei es für eine Druckmesszelle, ist in der Zeichnung auch eine Membran 18 und ein in den Grundkörper 12 eingearbeitetes Membranbett 20 dargestellt. Eine Mittellinie des Flansches 10 ist mit 22 bezeichnet.

Die aufgeschweißte Schicht 14 aus Sondermaterial wird vorzugsweise in einem durch einen Pfeil veranschaulichten Dichtbereich 24 des Flansches 10 aufgetragen und verschweißt, vorzugsweise durch Laserauftragsschweißen. In der Praxis hat sich ein spiralförmiges Auftragen des pulverförmigen Sondermaterials für die Schicht 14 als sinnvoll erwiesen. Eine Überlappung der Lagen ist hierbei sinnvoll.

Nach dem Aufschweißen des Sondermaterials wird der Flansch mit der aufgeschweißten Schicht auf die gewünschten Maße fertig gedreht. Anschließend wird die Membran 18 auf der Schicht 14 aus Sondermaterial fest geschweißt, sinnvollerweise mit mindestens zwei ringförmigen, konzentrischen Schweißnähten, die hier zur Vereinfachung nicht dargestellt sind. Vorzugsweise wird die Größe der Membran 18 so gewählt, dass sie, ihrer Aufgabe entsprechend, das Membranbett überdeckt, sie kann aber auch so gewählt werden, dass sie den gewünschten Dichtbereich 24 des Flansches 10 überdeckt. Als Sondermaterial für die Aufpanzerung des Flansches 10 wird vorzugsweise das gleiche Material gewählt, aus dem die später darauf zu befestigende Membran 18 besteht.

## Patentansprüche

1. Flansch für Druckmesszellen oder Druckmittler-Vorrichtungen, der im wesentlichen aus einem metallischen Grundmaterial aus einem Standardwerkstoff besteht und auf der einem Prozessmedium zugewandten Seite durch eine dort aufgebrachte Schicht (14) aus hochlegiertem Sondermaterial aufgepanzert ist.

2. Flansch nach Anspruch 1, bei dem der metallische Standardwerkstoff ein einfacher Kohlenstoff-Stahl oder ein üblicher austenitischer Stahl ist.

3. Flansch nach einem der Ansprüche 1 oder 2, bei dem das aufgebrachte Sondermaterial (14) aus einer Nickellegierung besteht.

4. Verfahren zur Herstellung eines Flansches nach einem der Ansprüche 1 - 3 mit folgenden Verfahrensschritten:
f) der Flansch (12) wird in seiner Grundform vorgedreht und gebohrt;
g) auf einen gewünschten Dichtbereich (24) des Flansches (12) wird metallisches Pulver aus dem vorbestimmten Sondermaterial aufgetragen;
h) das Pulver wird durch ein geeignetes Schweißverfahren auf den Flansch (12) aufgeschweißt;
i) der Flansch (12) mit dem aufgeschweißten Schicht (14) aus Sondermaterial wird auf die gewünschten Maße fertig gedreht; und
j) eine Membran (18) wird auf der Schicht (14) aus Sondermaterial fest geschweißt.

5. Verfahren nach Anspruch 4 beim das Pulver aus Sondermaterial spiralförmig auf den Flansch (12) aufgetragen wird.

6. Verfahren nach einem der Ansprüche 4 oder 5, bei dem das Pulver aus Sondermaterial durch Laserauftragsschweißen auf den Flansch (12) aufgeschweißt wird.

## Claims

1. Flange for pressure measuring cells or diaphragm seal units which essentially consists of a metal base material made of a standard material and which is hard-surfaced on a side facing toward the process medium by a layer (14) of high-alloy special material applied at this point.

2. Flange as claimed in Claim 1, wherein the metal standard material is a simple carbon steel or a common austenitic steel.

3. Flange as claimed in one of the Claims 1 or 2, wherein the special material (14) applied consists of a nickel alloy.

4. Procedure to produce a flange as claimed in one of the claims 1-3 with the following process steps:
f) the flange (12) is pre-turned and drilled in its basic form;
g) metal powder of the predetermined special material is applied to a desired sealing area (24) of the flange (12);
h) the powder is welded onto the flange (12) using a suitable welding method;
i) the flange (12) with the welded-on layer (14) of special material is finish-turned to the desired dimensions; and
j) a membrane (18) is welded in place on the layer (14) of special material.

5. Procedure as claimed in Claim 4, wherein the powder made of special material is applied to the flange (12) in spirals.

6. Procedure as claimed in one of the Claims 4 or 5, wherein the powder made of special material is welded onto the flange (12) using laser cladding.

## Revendications

1. Bride destinée aux cellules de mesure de pression ou aux dispositifs séparateurs, laquelle se compose pour l'essentiel d'un matériau de base métallique standard et est blindée avec un matériau spécial fortement allié sur le côté faisant face au produit du process, au moyen d'une couche (14) qui y est appliquée.

2. Bride selon la revendication 1, pour laquelle le matériau métallique standard est un acier au carbone simple ou un acier austénitique usuel.

3. Bride selon la revendication 1 ou 2, pour laquelle le matériau spécial (14) appliqué se compose d'un alliage de nickel.

4. Procédé destiné à la fabrication d'une bride selon l'une des revendications 1 à 3 avec les étapes de procédé suivantes :
f) la bride (12) est dégrossie au tour et percée dans sa forme de base ;
g) de la poudre métallique en un matériau spécial prédéfini est appliquée sur une zone d'étanchéité (24) souhaitée de la bride (12) ;
h) la poudre est soudée sur la bride (12) au moyen d'un procédé de soudage approprié ;
i) la bride (12) avec la couche (14) soudée, constituée d'un matériau spécial, fait l'objet d'un tournage de finition aux dimensions souhaitées ; et
j) une membrane (18) est soudée sur la couche (14) constituée d'un matériau spécial.

5. Procédé selon la revendication 4, pour lequel la poudre constituée d'un matériau spécial est appliquée en forme de spirale sur la bride (12).

6. Procédé selon la revendication 4 ou 5, pour lequel la poudre constituée d'un matériau spécial est soudée sur la bride (12) au moyen d'un soudage laser.
